# EUROPEAN PATENT APPLICATION

(11) **EP 4 770 099 A1**
(43) Date of publication of application: **01.07.2026**
(21) Application number: 25227658.9
(22) Date of filing: 30.12.2025
(51) Int. Cl.: H04N 21/234, H04N 21/262, H04N 21/44, H04N 21/81

(54) **UPDATING A SCENE DESCRIPTION BASED ON PATCHES**

(30) Priority: 31.12.2024 EP 24223908
(71) Applicant: Koninklijke KPN N.V., 3072 AP Rotterdam (NL); Nederlandse Organisatie voor Toegepast-Natuurwetenschappelijk Onderzoek TNO, 2595 DA 's-Gravenhage (NL)
(72) Inventor: SUBRAMANYAM, Shishir, 2595 DA 's Gravenhage (NL); SHIFERAW, Yonatan Woldeleul, 2595 DA 's Gravenhage (NL); HINDRIKS, Hendrikus Nathaniel, 2595 DA 's Gravenhage (NL)
(74) Representative: De Vries & Metman

(57) **Abstract**

A method and an apparatus for processing a scene description for a rendering device are described, wherein the method may comprise receiving a scene description comprising a data model defining an interactive scene comprising 3D objects, the data model including hierarchically organized nodes, the nodes including object nodes, each object node being associated with a 3D object and with object metadata, the object metadata including information about interaction with the 3D object by a user or based on physics simulation; receiving a sequence of update patches for updating the scene description, wherein each application of an update patch to the scene description is associated with an updated interactive scene to be rendered by the rendering device; determining a protected scene description associated with the sequence of update patches, the protected scene description including object protection metadata for identifying one or more object nodes in the data model as protected objects nodes, the object protection metadata signalling the rendering device that interaction with 3D objects associated with protected object nodes by a user or based on physics simulation is disabled or limited when the sequence of update patches are applied to the protected scene description; and, transmitting the protected scene description and the at least one update patch to the rendering device.

## Description

### Technical field

The embodiments relate to updating a scene description based on patches, and, in particular, though not exclusively, to methods and systems for updating a scene description based on patches and a computer program product for executing such methods.

### Background

MPEG SD is a new standard for interactive media scenarios. The MPEG SD standard as described in MPEG SD ISO/IEC FDIS 23090-14 Information technology - Coded representation of immersive media - Part 14: Scene Description extends the gITF scene specification standard by adding support for media assets such as video, 3D meshes and point clouds. Specifically, MPEG SD introduces an explicit decomposition between scene description, scene presentation and media operations. The Presentation Engine (PE) is responsible for rendering of a scene provided using a scene description document, which comprises a hierarchical model including nodes for describing interactable objects in a scene. The PE delegates the retrieval and parsing of the scene description document and decoding of media to the Media Access Function (MAF), which then provides the required media assets in the requested format using memory buffers as an interface to the PE.

The MPEG_scene_dynamic extension (MSD) provides functionality for updating the scene description document to enable rendering of dynamic scenes by the PE. Scene updates can be achieved by a new scene description document (typically a JSON file) or a patch document that uses the JSON Patch protocol to update the active scene description document. Scene update patches allow changing the order of nodes using move and remove operations. This can lead to patch documents that attempt to update nodes that do not match any nodes in the active scene. In such cases, the update is discarded.

In a dynamic scene, when delivering a scene in a series of update patches, changes to the scene by the user due to interaction or physics may conflict with the update patches. This will disrupt the rendering of the scene and lead to undesired behavior such as discarding of the update patches, which breaks the flow of the scene, or misapplication of the update patches to the modified scene, which disrupts the user experience as the scene will be different from what was intended by the author.

Hence, from the above it follows there is a need in the art for improved methods and systems for methods and systems for updating a scene description based on patches

### Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments relate to a method of processing a scene description associated with an interactive scene, wherein the method comprise: receiving the scene description comprising a data model defining the interactive scene, the interactive scene comprising one or more virtual objects, the data model including hierarchically organized nodes, the nodes including object nodes, each object node being associated with a virtual object of the one or more virtual objects; receiving object metadata associated with the object nodes, the object metadata including transform information comprising a position, orientation and/or scaling for the one or more the virtual objects in the interactive scene and interaction information defining one or more types of interaction that are available for the one or more virtual objects; receiving one or more update patches, preferably a sequence of update patches, for updating the scene description, wherein applying an update patch to the scene description results in an updated scene description; determining object protection metadata defining one or more object nodes of the object nodes in the data model as protected objects nodes, the object protection metadata signalling that interaction with virtual object objects associated with the protected object nodes is disabled or limited during the application of the one or more update patches to the scene description; and, sending the object protection metadata to a rendering device.

In an embodiment, determining object protection metadata may include: determining one or more object nodes associated with one or more virtual objects for which the hierarchy in the data model is modified when the one or more update patches are applied;

In an embodiment, determining object protection metadata may include determining object nodes associated with virtual objects for which the transform information and/or the interaction information is modified when the one or more update patches are applied.

In an embodiment, the object protection metadata may signal a presentation engine to disable or limit the scene interactivity and/or node interactivity as defined in the MPEG SD standard; and, optionally, when the disablement or limitation of the scene interactivity and/or node interactivity is lifted.

In an embodiment, the interaction information may include one or more triggers associated the one or more virtual objects, each trigger of the one or more triggers defining at least one of: a collision trigger, a proximity trigger, a visibility trigger, a user input trigger, a timer trigger that is activated based on a timer.

In an embodiment, the object protection metadata may signal a presentation engine to disable or limit at least part of the one or more triggers associated the one or more virtual objects; and, optionally, when the disablement or limitation of the at least part of the one or more triggers is lifted.

In an embodiment, the interaction information may include one or more actions associated with the one or more virtual objects, the one or more actions including at least one of: a manipulation, e.g. a translation, rotation and/or scaling, of a virtual object, a haptic feedback, a sound effect, a playout of an animation, a playout of media data, or a physic simulation.

In an embodiment, the object protection metadata may signal a presentation engine to disable or limit at least part of the one or more triggers associated the one or more virtual objects and, optionally, when the disablement or limitation of the at least part of the one or more actions is lifted.

In an embodiment, the nodes may be organized in a tree-like structure comprising a root, the tree-like structure of nodes forming a scene graph and/or wherein scene description further includes one or more source identifiers, preferably one or more URIs or URLs, for identifying sources for obtaining media assets associated with the virtual objects.

In an embodiment, the object metadata may be included in the scene description.

In an embodiment, the scene description may be a scene description document as defined in the MPEG SD standard.

In an embodiment, the update patches may be update patches as defined in RFC 6902 from the IETF standardization organisation.

In an embodiment, the one or more patches are pre-recorded patches.

In a further aspect, the embodiments may relate to a method of rendering an interactive scene based on a scene description, wherein the method may comprise: receiving the scene description comprising a data model defining the interactive scene, the interactive scene comprising one or more virtual objects, the data model including hierarchically organized nodes, the nodes including object nodes, each object node being associated with a virtual object of the one or more virtual objects; receiving object metadata associated with the object nodes, the object metadata including transform information comprising a position, orientation and/or scaling for the one or more the virtual objects in the interactive scene and interaction information defining one or more types of interaction that are available for the one or more virtual objects; receiving one or more update patches, preferably a sequence of update patches, for updating the scene description, wherein applying an update patch to the scene description results in an updated scene description; receiving object protection metadata associated with the scene description and the one or more update patches, the object protection metadata defining one or more object nodes of the object nodes in the data model as protected objects nodes, the object protection metadata signalling that interaction with virtual objects associated with the protected object nodes is disabled or limited during the application of the one or more update patches to the scene description; and, rendering by a rendering device an interactive scene based on the scene description, the one or more patches and the object protection metadata, the rendering including applying one of the one or more update patches to the scene description to determine an updated scene description and rendering an interactive scene based on the updated scene description, wherein during the application of an update patch interaction with virtual objects in the scene is disabled or limited based on the object protection metadata.

In an embodiment, a presentation engine in the rendering device may be configured to control the rendering of the interactive scene based on the scene description, the presentation engine being further configured to instruct a media access function (MAF) to execute retrieval of media assets associated with the virtual objects.

In a further aspect, the embodiments may relate to an apparatus, preferably node protection module, for processing a scene description, the apparatus comprising: a computer readable storage medium having at least part of a program embodied therewith; and, and a processor, preferably a microprocessor, coupled to the computer readable storage medium, wherein responsive to executing the computer readable program code, the processor is configured to perform executable operations comprising: receiving the scene description, the scene description comprising a data model defining the interactive scene, the interactive scene comprising one or more virtual objects, the data model including hierarchically organized nodes, the nodes including object nodes, each object node being associated with a virtual object of the one or more virtual objects; receiving object metadata associated with the object nodes, the object metadata including transform information comprising a position, orientation and/or scaling for the one or more the virtual objects in the interactive scene and interaction information defining one or more types of interaction that are available for the one or more virtual objects; receiving one or more update patches, preferably a sequence of update patches, for updating the scene description, wherein applying an update patch to the scene description results in an updated interactive scene; determining object protection metadata defining one or more object nodes of the object nodes in the data model as protected objects nodes, the object protection metadata signalling that interaction with virtual object objects associated with the protected object nodes is disabled or limited during the application of the one or more update patches to the scene description; and, providing the object protection metadata to a rendering device.

In an embodiment, the processor of the apparatus may be further configured to perform any of the method steps as described above.

In a further aspect, the embodiments may relate to an apparatus for processing a scene description for a rendering device, wherein the apparatus may comprise: a computer readable storage medium having at least part of a program embodied therewith; and, and a processor, preferably a microprocessor, coupled to the computer readable storage medium, wherein responsive to executing the computer readable program code, the processor is configured to perform executable operations comprising: receiving the scene description comprising a data model defining the interactive scene, the interactive scene comprising one or more virtual objects, the data model including hierarchically organized nodes, the nodes including object nodes, each object node being associated with a virtual object of the one or more virtual objects; receiving object metadata associated with the object nodes, the object metadata including transform information comprising a position, orientation and/or scaling for the one or more the virtual objects in the interactive scene and interaction information defining one or more types of interaction that are available for the one or more virtual objects; receiving one or more update patches, preferably a sequence of update patches, for updating the scene description, wherein applying an update patch to the scene description results in an updated scene description; receiving object protection metadata associated with the scene description and the one or more update patches, the object protection metadata defining one or more object nodes of the object nodes in the data model as protected objects nodes, the object protection metadata signalling that interaction with virtual objects associated with the protected object nodes is disabled or limited during the application of the one or more update patches to the scene description; and, rendering by rendering device an interactive scene based on the scene description, the one or more patches and the object protection metadata, the rendering including applying one of the one or more update patches to the scene description to determine an updated scene description and rendering an interactive scene based on the updated scene description, wherein during the application of an update patch interaction with virtual objects in the scene is disabled or limited based on the object protection metadata.

In an embodiment, a presentation engine in the rendering device may be configured to control the rendering of the interactive scene based on the protected scene description, the presentation engine being further configured to instruct a media access function (MAF) to execute retrieval of media assets associated with the virtual objects.

The embodiments may also relate to a computer program product comprising instructions which, when the program is executed by a computer, cause the computer to carry the method steps according to any of method steps as described above.

The invention will be further illustrated with reference to the attached drawings, which schematically will show embodiments according to the invention. It will be understood that the invention is not in any way restricted to these specific embodiments.

### Brief description of the drawings

**Fig. 1A** and **1B** depicts an example of a hierarchical data model for describing a scene;
**Fig. 2A-2C** illustrate user interaction with virtual objects in an extended reality scene;
**Fig. 3** depicts a media system for rendering assets based on a scene description;
**Fig. 4A** and **4B** a logical architecture of a rendering system that may be used by the embodiments in this disclosure;
**Fig. 5** illustrates a data format for updating a scene description based on patches;
**Fig. 6** illustrates a data format for updating a scene description based on patches;
**Fig. 7A** and **7B** provide an example of a change in the hierarchy of the nodes by a user;
**Fig. 8A-8C** illustrate an example of a change in the position of the second box is moved before the update patch;
**Fig. 9A** and **9B** depict flow diagrams of methods of processing a scene description for a rendering device according to various embodiments;
**Fig. 10A** and **10B** describe a process of rendering an interactive scene based on a protected scene description and an associated sequence of update patches according to an embodiment.
**Fig. 11** depicts a schematic of an exemplary rendering system which is adapted to render interactive scenes based on a protected scene description document;
**Fig. 12** depicts a block diagram illustrating an exemplary data processing system that may be used with embodiments described in this disclosure.

### Description of the embodiments

3D assets are digital files that represent objects or elements in a three-dimensional space. These assets consist of data that define the shape, texture, and appearance of these objects, allowing them to be rendered and animated in various software applications. One of the most common types of 3D assets are 3D models. These are digital representations of physical objects such as characters, vehicles, buildings, or props. 3D modeling is the process of developing a mathematical coordinate-based representation of a surface of an object (inanimate or living) in three dimensions.

A 3D model may represent the geometry of an object in the form of a mesh. Typically, a mesh may define collection of points in 3D space wherein the points define vertices which are connected by various geometric entities such as triangles, lines, curved surfaces, etc. to form a surface of a 3D object. Hence, these 3D models are hereafter also referred to as virtual objects. 3D models can be created manually, algorithmically (procedural modeling), or by scanning. The surface of a 3D mesh may be further defined with texture mapping. A scene may be created using a plurality of 3D models. A 3D model can be displayed as a two-dimensional image through a process called 3D rendering.

Real-time rendering algorithms are typically structured using pipelines. Commonly used rendering pipelines are defined by platforms like DirectX and OpenGL. Graphical Processing Units (GPUs) have been designed and evolved with and as part of these rendering pipelines, and offer processing capacity for highly parallelized algorithms. A rendering pipeline can usually be divided into different stages, including an application stage, wherein the definition of the 3D environment (or scene) may be stored and sections of the scene are selected, pre-processed, and sent to the following stages, namely the geometry stage, at which where the relevant parts of the virtual objects in an extended reality scene are projected onto a 2D plane and the rasterization stage, wherein the color of each mapped object is determined.

Multiple virtual objects can be used to create scenes for rendering. In a digital description of such scenes, additional metadata may be included such as: the position and orientation of each object, the configuration of the (virtual) camera, the position, configuration and type of lights, and references to external files and media. Typically, scene descriptions are based on a hierarchical model, wherein entities may be defined with respect to each other. Such hierarchical model simplifies the specification of complex and/or detailed relationships such as the location and relationships of bones in a skeleton. Different formats for scene descriptions include gITF, X3D and MPEG SD.

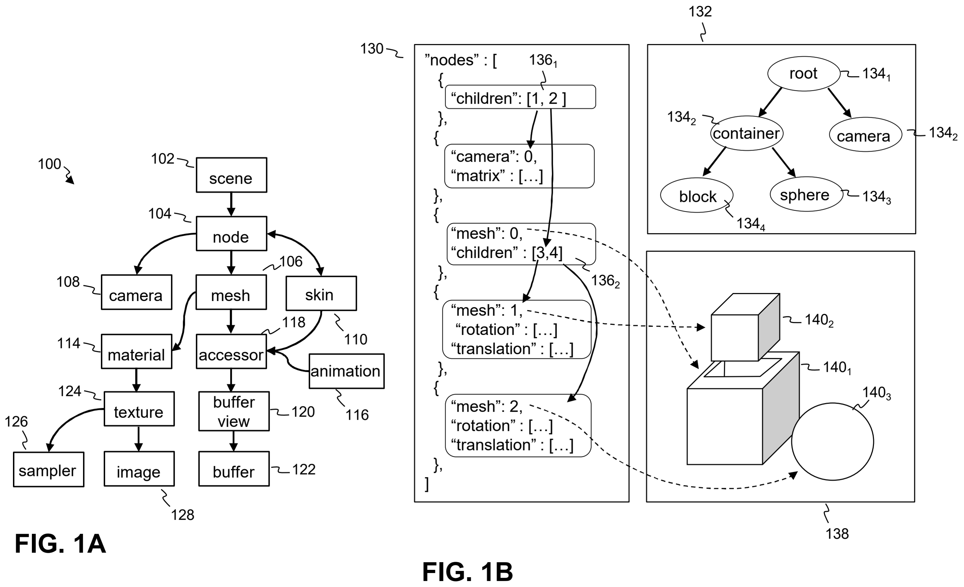

**Fig. 1A** and **1B** depicts an example of a hierarchical data model for describing a scene according to ISO/IEC FDIS 23090-14 Information technology - Coded representation of immersive media - Part 14: Scene Description for MPEG Media (hereafter referred to as MPEG SD). In this example the scene is described using the gITF format which includes gITF entities and information defining relationships between gITF entities. The gITF format is an interoperable format for the exchange of 3D and scene data developed by the Khronos Group. gITF documents are serialized using either the JSON format or a binary glTF-specific format (.glb).

As shown in **Fig. 1A**, a scene node **102** may be the entry point for the description of a scene. The scene refers to nodes **104** that define the scene graph. The scene graph linkes nodes describing virtual objects of the extended reality scene. A node may contain a transformation (e.g., rotation or translation), and it may refer to further (child) nodes. A node may refer to mesh **106** describing a geometric object that appears in the scene, a camera instance **108** that is associated with the node which define the view configuration for rendering the scene or a skin **110** that describes a mesh deformation. A skin defines parameters that are required for vertex skinning, which allows the deformation of a mesh based on the pose of a virtual character. The values of these parameters are obtained from an accessor. The description may further comprise accessor objects **112** which may be used for accessing the actual geometry data and the materials **114** which define the appearance of the object when it is rendered. Further, an animation **116** may describe how transformations of certain nodes (e.g., rotation or translation) change over time.

The accessor **118** may be used as an abstract source of arbitrary data. It is used by the mesh, skin, and animation, and provides the geometry data, the skinning parameters and the time-dependent animation values. It refers to a bufferView **120**, which is a part of a buffer **122** that contains the actual raw binary data. The materials may be further associated with parameters that define the appearance of an object. It usually refers to texture objects **124** that will be applied to the rendered geometry. The texture may be defined by a sampler **126** and an image **128**, wherein the sampler defines how the texture image should be placed on the object. As can be seen from this model, scenes may be defined as arrays of nodes, where the nodes may have sets of children. Vertex and texture data can be referred to using buffers and bufferviews respectively. Sets of textures may be mapped onto meshes using materials.

**Fig. 1B** depicts an example of a gITF document comprising a hierarchical data model describing a scene. The document may be a JSON file **130** describing the contents of a 3D scene. It may comprise a description of a scene structure **132** including a hierarchy of nodes **134₁₋₄** defining the scene graph. At least part of the nodes may be associated with a 3D model (e.g. a mesh) defining the objects in the 3D scene. These nodes may be referred to as object nodes. The nodes may be organized in a tree-like structure as shown in the figure, including a root node, child nodes and leaves. A node may contain an array referred to as called children **136_{1,2}** that contains the indices of its child nodes. Hence, each node may be one element of a hierarchy of nodes, which together defines the structure of the scene as a scene graph. Virtual objects **140_{1,2}** that appear in the scene **138** are defined using meshes that are associated with to the nodes. Further, materials may define the appearance of the objects, animations describe how the 3D objects are transformed (e.g., rotated or translated) over time, skins define how the geometry of the objects is deformed based on a skeleton pose and cameras describe the view configuration for the renderer.

It is noted that the hierarchical data model for describing a scene as explained with reference to **Fig. 1A** and **1B** is just one of a number of possible representations of such hierarchical data model. For example, the ISO X3D standard describes an XML-based format for the specification of 3D scenes, which is maintained by the Web3D Consortium. Main implementations of the X3D standard are X3DOM and X_ITE. In X3D, scenes are described using a hierarchical node structure (powered by XML), that allows for the definition of assets and the scene with similar features as gITF (in fact X3D supports including gITF documents).

Standards are being developed for enabling description and execution of interactive media scenarios. For example, the MPEG SD standard extends the gITF scene specification standard by adding support for media. Specifically, MPEG SD introduces an explicit decomposition between scene description, presentation and media operations.

MPEG SD ISO/IEC FDIS 23090-14 Information technology - Coded representation of immersive media - Part 14: Scene Description for MPEG Media (MPEG SD) supports interactivity with the use of two extensions, i.e. the MPEG_scene_interactivity and MPEG_node_interactivity at the scene and node level respectively. When present, node level interactivity is meant to complement scene level interactivity. Based on these extensions, objects may be defined as interactable objects, wherein the interaction is based on triggers, actions and behaviours. The metadata in the scene description document may define what type of interaction is possible with a 3D object. Hence, each node in the hierarchical data model that defines an interactable 3D model may further include metadata specifying what type of user interaction is possible for an interactable 3D model. The metadata may include information about triggers which may be used to detect user intent which are defined based on collisions, proximity, visibility and user input. The metadata may include information about actions that define the effect of user interaction. The metadata may include information about behaviours which may be composed of combinations of triggers and actions. The metadata may further include control parameters for the different types of interactions.

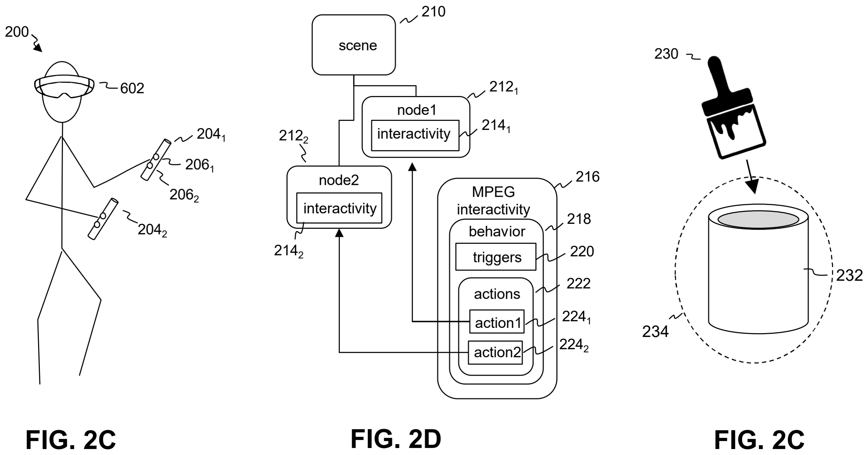

**Fig. 2A-2C** illustrate user interaction with virtual objects in an extended reality scene that may be used by the embodiments in this disclosure. As shown in **Fig. 2A**, a user **200** of an extended reality application may use an user interface, e.g. a XR playout devices such as a head mounted device (HMD) or XR glasses **202** and XR controllers **204_{1,2}** which include sensors which are configured to translate hand- and arm motion, e.g. gestures, into control signals for controlling a virtual object that is rendered in the display of the XR playout device. Similarly, a head mounted device (HMD) or XR glasses include sensors and/or cameras which are configured to translate motion and/or expressions into control signals for controlling a virtual object. This way, during execution of an extended reality application a user may interact with virtual objects in a scene as e.g. shown in **Fig. 2C****.** In this example, the user may use XR controllers to control a virtual object, in this example a virtual paintbrush **230**, and let it interact with another virtual object, in this example a paint can **232.** An XR hand-controller may include switches **206₁₋₄** that may be used by the user to activate or trigger certain actions.

**Fig. 2B** illustrates how interaction with a virtual object is introduced in a scene description document that a rendering system uses for rendering a scene. The figure shows a simple example of a hierarchical structure of nodes **212_{1,2}** forming a scene graph **210** as discussed with reference to **Fig. 1A** and **1B**. The scene or the nodes of the scene may be associated with metadata **214_{1,2}** signalling the PE of the rendering system that that the nodes are associated with interactable virtual objects. The metadata may specify what type of interaction is possible.

The metadata may include information about triggers **220** which may be used to detect a user intent, which are defined based on collisions, proximity, visibility and user input. For example, in an embodiment user input may activate a trigger to perform a certain action by pressing one or more switches of the XR controller as shown in **Fig. 2A.** In a further embodiment, a trigger may be activated by an object that appears in the viewport of a head mounted device or XR glasses. In yet a further embodiment, a trigger may be activated when a virtual object is in the proximity of another object. This is illustrated in **Fig. 2C** wherein the second virtual object **232** (in this case a paint can) is located within a volume of interest **234** of a certain shape. When the first virtual object moves towards the boundary of the volume of interest an action may be triggered based on the distance between the first virtual object and the boundary of the volume of interest.

The metadata may include information about actions **222** that define the effect of user interaction. The metadata may include information about behaviours **218** which may be composed of combinations of triggers and actions. The metadata may further include control parameters for the different types of interactions.

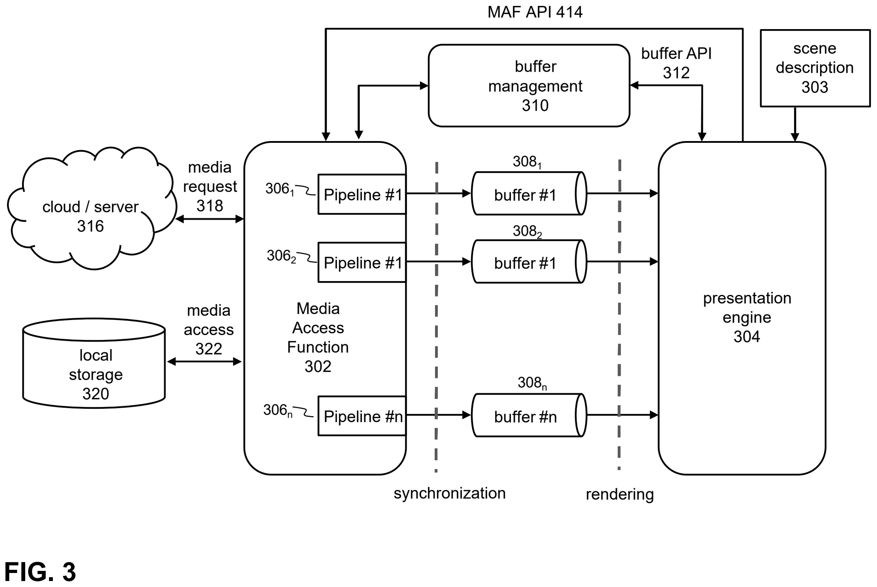

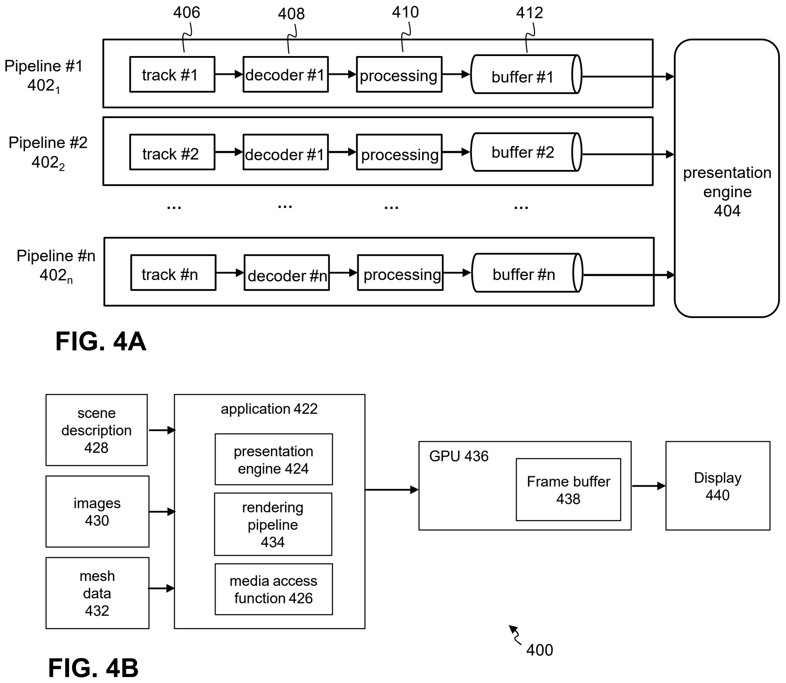

Thus, when the XR experience is running a human user interaction with a virtual object may be realized by a user controlling an extended reality user interface, e.g. XR controller as depicted in **Fig. 2A.** This interaction may be activated (i.e. associated actions are triggered) when the virtual object controlled by the user is moved towards a volume of interest containing a virtual object. The triggered actions realize different functionalities, like grasping, haptics feedback, sound effects or collision detection for object manipulation. Other types of triggers may be used in the scene description as well, for example triggers based on a timer or triggers based on a combination of actions by a user. The renderer system obtains a scene description and processes it as described above with reference to **Fig. 3** and **4****.** When a trigger is activated, the associated actions are performed.

**Fig. 3** depicts a media system for rendering assets based on a scene description as known from MPEG SD. The system may include a presentation engine PE **204** and a media access function MAF **302.** The presentation engine may process assets, e.g. 3D objects in a 3D scene, 2D scenes and media content, e.g. video, and prepare the assets for rendering by a rendering device (not shown). The PE may process assets based on a scene description **303.** The MAF and the PE may communicate with each other via a MAF application programming interface (MAF API) **314.** This way, the PA may instruct the MAF to retrieve and prepare assets, e.g. 3D objects and/or media content, that are needed for rendering a scene as defined in the scene description. To that end, the scene description may include information about locations, e.g. resource locators such as URLs or URIs, where assets that are needed from a scene can be retrieved. This information may be provided by the PA to the MAF in one or more instructions, by the PA to the MAF (e.g. one or more MAF API calls). The MAF may retrieve the assets from a local storage **320** via a media access connection **322** or from the cloud or a server network **316** via one or more media requests. The PE may be responsible for rendering the scene provided by the scene description document, wherein the PE may delegate retrieval, parsing and decoding of media to the MAF. The MAF may then provide the required media in the requested format using buffers as an interface to the PE. Typically, the buffer is a circular buffer. The buffers may be managed by a buffer management module **310** wherein a buffer API **312** provides an interface for the MAF and the PE to the buffer management module. If assets, e.g. media objects, are received by the MAF, it may initiate and allocate one media pipeline **306₁₋ₙ** for each media object, wherein each media pipeline is associated with a single buffer, which can be accessed by the PE.

The media pipelines and the buffers allow decoupling of the rendering by the PE and the media retrieval by the MAF. The PE can use information in the scene description to instruct the MAF to retrieve assets of a scene, e.g. media objects and to initiate pipelines with associated buffers to process media objects so that the PE can retrieve each processed objects via the buffer.

**Fig. 4A** and **4B** a logical architecture of a rendering system that may be used by the embodiments in this disclosure. **Fig. 4A** illustrates the pipelines of the media system as depicted in **Fig. 3** in somewhat greater detail. Each of the pipelines **402₁₋ₙ** may be associated with encoded media data representing a media object which may be stored as a track **406** as known from the ISO Base Media File format. Encoded media data may be formatted in tracks and each track may include media data associated with a specific asset, e.g. video data, point cloud, a mesh (e.g. vertex positions), a texture image, etc. The MAF may retrieve media data of a track and provide the data to a decoder **408** for decoding the media data into decoded media data, which can be subsequently processed, e.g. formatted, by a media processing unit **410** before stored into a buffer **412.**

**Fig. 4B** illustrates a logical architecture of a rendering system **400.** The system may include application **422** running on a processor, which may be configured to send logical instructions to one or more Graphical Processing Units (GPUs) **436** for rendering images onto a display **420**, e.g. a display of a head-mounted device or the like. A GPU may comprise one or more frame buffers **438** which are used to collect and store a digital representation of the next image to be displayed. The application may be configured to display an interactive scene (either 2D or 3D) which is defined in a scene description **428** as described with reference to the embodiments in the application. One or more rendering pipeline abstractions **434** may be used to specify how to render the scene according to the application-specific view. In this way, the application does not need worry about sending instructions to the GPU, but defers this responsibility to the rendering (pipeline) library. The application may further include a Presentation Engine (PE) **424** and Media Access Function (MAF) **426** as described with reference to **Fig. 3****.** The PE is responsible for setting up the presentation of the scene as indicated by a scene description document **428.** The PE achieves this by instructing the MAF to retrieve and prepare assets (e.g. 3D meshes **432** and images **430** comprising specific assets information, e.g. texture, color, materials, etc.) as specified by the scene description.

It is noted that **Fig. 4** is a non-limiting example of a logical architecture of a rendering system. Many variations are possible. For example, the frame buffer may also be used to write immediately to the display. Further, the application (or one or more parts thereof) may be implemented as software running on a Central Processing Unit (CPU), however it is also possible that the application (or one or more parts thereof) may be executed on a different system (e.g., the GPU itself or a System-on-a-chip (SoC)). Further, some parts of the application may be implemented in hardware. In further embodiment, the role of the GPU may be fulfilled by the CPU or other system, e.g., using software-based rendering or as an embedded specialized chip on the CPU. In another embodiment, the rendering pipeline may be part of the application itself.

Due to implementation details chosen by MPEG SD, the division between which assets are retrieved by the MAF or PE is not strict. The PE may retrieve assets specified in gITF, and the MAF may retrieve assets as specified by MPEG so there will be overlap in the assets that MAF and PE may retrieve. MPEG SD comprises of a set of extensions to gITF 2.0 dedicated to enable this functionality. These include the top-level extension MPEG_media that provides as array of media items that are referenced within the scene description document.

The MPEG_scene_dynamic extension (MSD) provides functionality of updating a scene description document. MSD relies on the MPEG_media extension and refers to a single media item and track that may be used to receive scene updates. Scene updates can be either a complete SD document (JSON file) or a patch document that uses the JSON Patch protocol defined in IETF RFC 6902 to update the active SD document. Each scene update may be processed as single timed transaction.

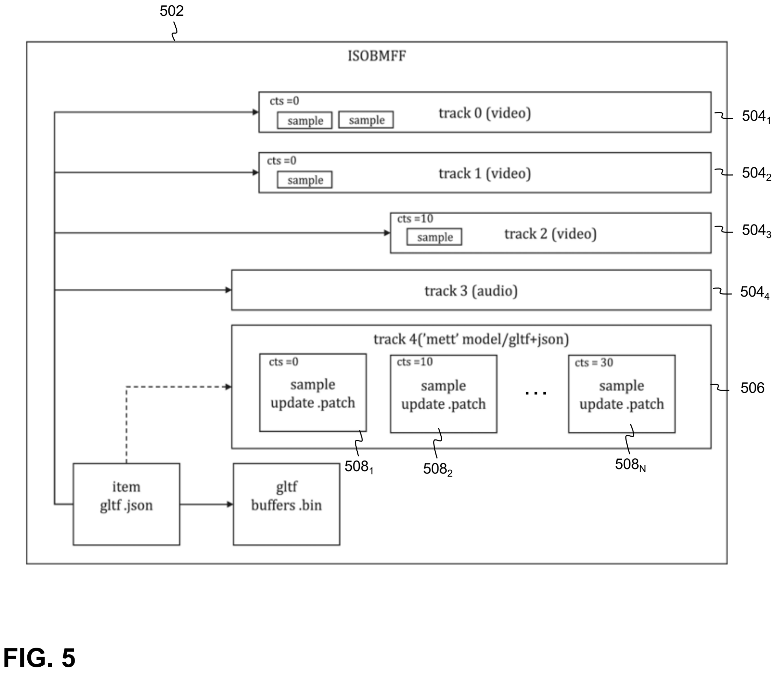

**Fig. 5** illustrates a data format for updating a scene description based on patches. In particular, the figure illustrates an ISOBMFF-based carriage format for a sequence of update patches **506_{1-N}** stored as a dedicated media track **506** next to video and audio tracks **504₁₋₄** associated with media data. These patches may be applied sequentially in time. These patches, which may be referred to as scene patches, may be JSON patches as specified in RFC 6902 from IETF organisation. Such ISOBMFF-based data carriage format may be used both for SD documents and JSON patch documents. The order of the gITF nodes in the SD document is used for referencing. Scene updates based on patches allow changing the order of nodes using move operations and remove operations. This can lead to patches that attempt to update nodes that do not match any nodes in the active scene. In such cases, the update is discarded.

An example of the execution of a JSON patch provided below. An original JSON file may look as follows:

| |
|---|
| ```
              {
               "baz": "qux",
               "foo": "bar"
              }
``` |

The JSON patch may include examplary operations for value replacement ("replace"), node addition ("add") and node removal ("remove"):

| |
|---|
| ```
              [
               { "op": "replace", "path": "/baz", "value": "boo" },
               { "op": "add", "path": "/hello", "value": ["world"] },
               { "op": "remove", "path": "/foo" }
              ]
``` |

Applying the patch to the JSON file may generate the following result:

| |
|---|
| ```
              {
               "baz": "boo",
               "hello": ["world"]
              }
``` |

The scene description of scenes that include interactable objects and possibility to change the scen using update patches provides the possibility of interactive dynamic scenes. In particular, the MPEG scene_dynamic extension may be used to create interactive dynamic scenes, including interactive dynamic scenes that provide multiuser experience, for many different use cases.

One use case may relate to a two-player chess game, wherein the scene is a chess game with chess pieces. A JSON type scene description defining an ordered list of nodes, wherein each node relates to a chess piece with which a user can interact. This scene description may be used by playout devices of both users render the chessboard and the chess pieces. For example, a pawn may be described as a 3D translation vector relative to the parent node. To move the pawn forward two places, a player may interact with the scene through a user interface, causing a change the Z component of the translation vector from 0.156 to 0.036. After making this change the playout device of the first user may generate a JSON patch that includes the translation which is then sent to the playout device of the second user. The patch may look as follows:

| |
|---|
| ```
              [
                {
                  "op": "replace",
``` |
| ```
                  "path": "/nodes/30/translation/2",
                  "value": 0.03634210407733917
              ]
``` |

The playout devices of the second user may apply this patch to its scene description document (e.g. a local gITF document) to generate an updated scene description document which is then rendered by the playout device before the second user makes a move.

A further use case in which patches may be used is replay of a live event with a multi-user interactive dynamic scene update scheme wherein patches are used to update the scene for all users. After the completion of a live event with a multi-user interactive dynamic scene, time-stamped JSON update patches that were used during the live event by the participating playout devices may be collected and stored. Replay of the live-event by a user may be realized by providing the initial scene and the sequence of timed patches to the playout device of the user, which then sequentially applies the patches to the scene description. Each time a patch is applied, the scene description is changes and the changed scene description may be rendered by the playout device. The replay of the scene itself can also become a multi-user interactive experience where users can meet and watch the replay together. A shared replay experience can be achieved where users can view the events of the game unfold, while interacting with each other and freely navigating the game space.

Hence, in the examples described above a dynamic scene may be realized wherein scene changes are delivered in a series of update patches to a playout device of a user. The changes to the scene as instructed by the update patches however may conflict with changes to the scene by the user due to for example interaction or physics. These conflicting scene changes may disrupt the scene and may lead to undesired behaviour such as the update patches being discarded - which breaks the flow of the scene - or misapplication of the update patches to the modified scene - which disrupts the experience as the scene will be different from what was intended by the author.

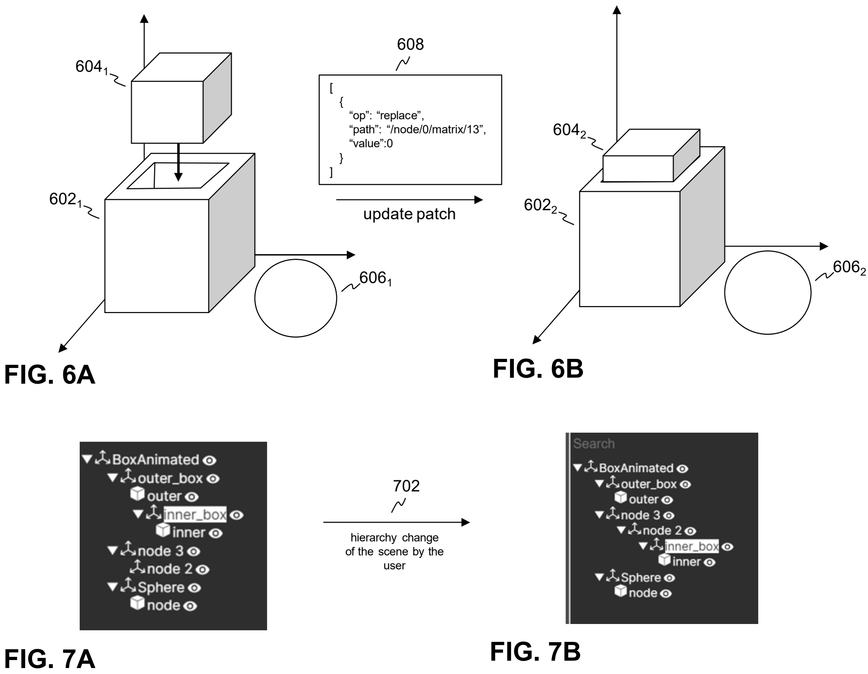

This problem is illustrated with reference to **Fig. 6** and **7. Fig. 6A** depicts a scene rendered by a playout device wherein a first box is suspended above a second box that is open at its top. A sphere may be located next to the second box. **Fig. 7A** provides a part of a description of a scene structure including a hierarchy of nodes wherein the nodes may be associated with interactable objects, in this case the two boxes and the sphere, wherein the first box is a child of the second box. The scene description is used by the playout device to render the scene. Then, an update patch **608** may be sent to the playout device to update the scene wherein the first box drops inside the second box as shown in **Fig. 6B****.**

This scene update may be discarded or can produce unintended results if the hierarchy of nodes in the scene is changed or if the position of the second box is moved before the update patch is sent or applied.

**Fig. 7A** and **7B** provide an example of a change in the hierarchy of the nodes by a user. For example, a user may initiate a change the hierarchy of the scene (step **702**) by moving the first block from being a child of the second box to a child of a separate node (node 2) as depicted in the scene description of **Fig. 7B****.** If in this situation an update patch is sent to drop the first block to the second box, the update patch is discarded as the first block is no longer found under the second box in the scene hierarchy. The sphere, which is another interactable object present in the scene is not affected by the update patch.

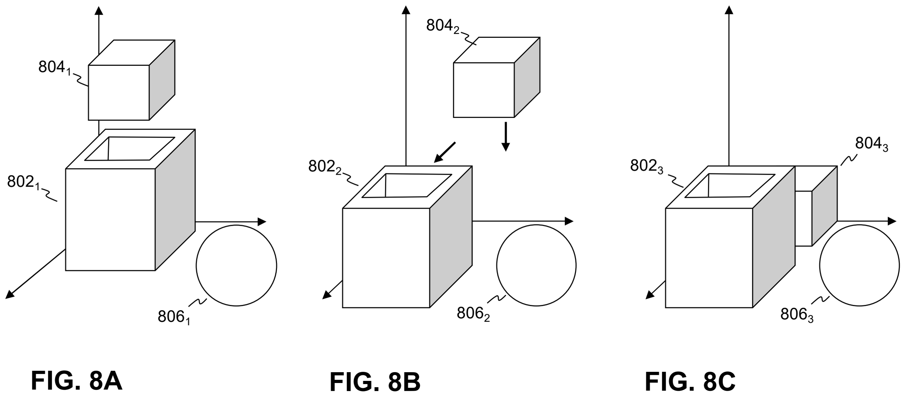

**Fig. 8A-8C** illustrate an example of a change in the position of the second box is moved before the update patch. As shown in **Fig. 8A**, the example may start with the same initial scene comprising the two boxes and a sphere as in **Fig. 6A****.** In this case however, the user moved the second box from its initial location to a further location as a result of interaction or physics as shown in **Fig. 8B****.** If update patch is sent to drop the first block in the second box, then the update patch will not accomplish a scene update as intended but instead will drop the pink block to the ground as shown in **Fig. 8C****.** Hence, the patch behavior in this case is unpredictable resulting in a disrupted scene. If it was a football scene, the scene is a goal missed where the intended scene was goal scored. Therefore, there is no way to guarantee that a patch will not be discarded or will be applied correctly (avoiding disruption of scene) in an interactive scene.

The problems illustrated with reference to **Fig. 6-8** can easily become very complex when considering a multi-user scenario, where multiple users enter a shared scene. When update patches are sent to the playout devices of the users in the shared scene, the source of patches will be both from the shared scene (such as pre-recorded patches as e.g. prepared by a content author) and the other users interacting with the scene (user update patches). In this case, the problem of discarded updates and disrupted scene updates may be further complicated by the fact that a user may receive conflicting patches - user-generated patches from the other users which interacted with the scene, and pre-recorded patches associated with the media assets of the media application.

A naïve way to solve the above-mentioned problems may be resetting the scene and sending a fresh copy of the scene every time before a patch is sent. Such approach however leads to additional overhead of sending new scene description documents; and, discarding user interactions and interactions associated with physic simulations each time a new scene description document is sent. The latter will disrupt interactions and reduce the immersive experience of the user due to events like: interactions by the user will not persist and will be abruptly discarded; abrupt movement of the objects as their scene suddenly resets; and, shared multi-user experience is no longer possible because the scene for which the users generate patches after interaction/modification is reset to a new scene discarding or making their patches obsolete.

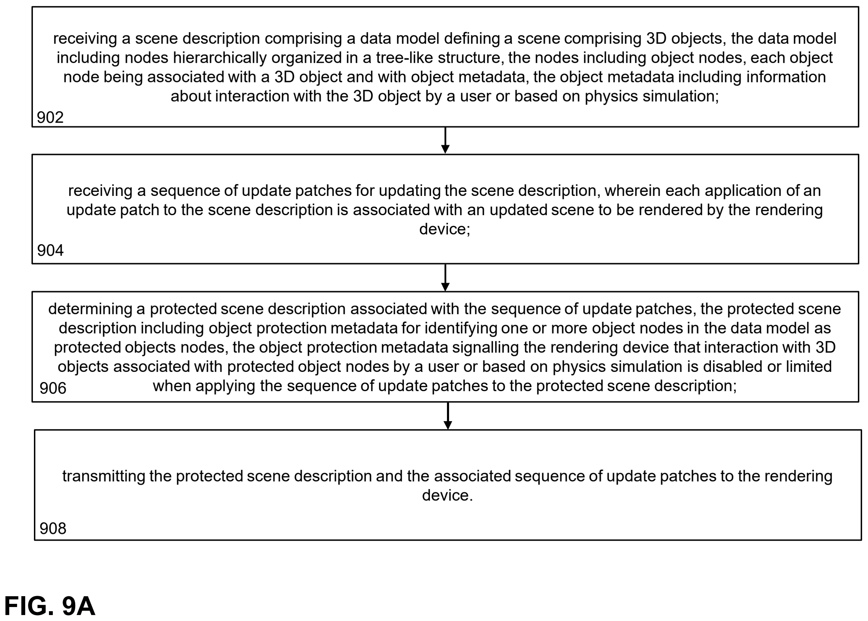

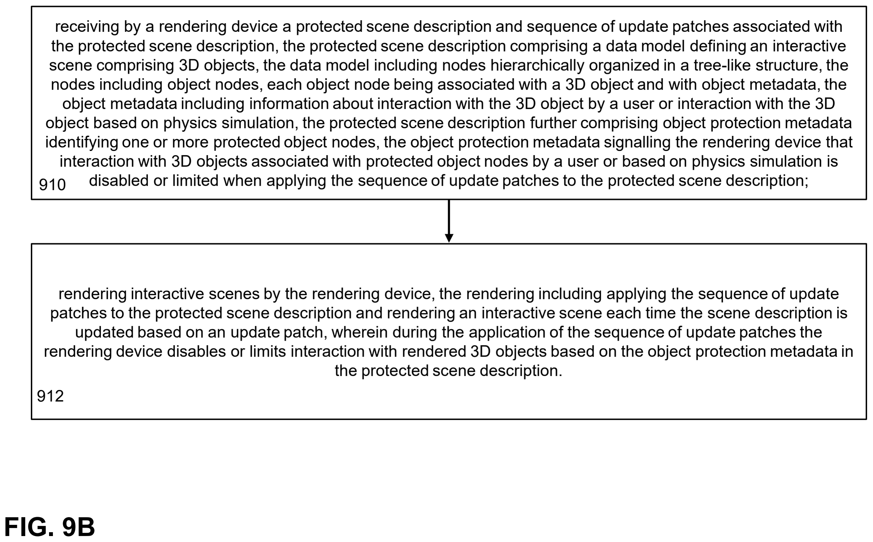

**Fig. 9A** and **9B** depict flow diagrams of methods of processing a scene description for a rendering device according to various embodiments.

**Fig. 9A** depicts a method which may be executed by a node protection module that is configured to determine a protected scene description document associated with a sequence of update patches. The method may include receiving a scene description comprising a data model defining a scene comprising 3D objects (step **902**). The data model may include nodes that are hierarchically organized in a tree-like structure. The nodes may include object nodes, wherein each object node is associated with a 3D object and with object metadata, wherein the object metadata includes information about interaction with the 3D object by a user or interaction with the 3D object based on physics simulation. The method may further include receiving a sequence of update patches for updating the scene description (step **904**). Each application of an update patch to the scene description document is associated with an updated scene that is to be rendered by the rendering device. The method may further include a step of determining a protected scene description document associated with the sequence of update patches, wherein the protected scene description comprises object protection metadata for identifying one or more object nodes in the data model as protected objects nodes (step **906**). the object protection metadata may signal the rendering device that interaction with a 3D object that is associated with a protected object node by a user or based on physics simulation is disabled or limited during the application of the sequence of update patches to the protected scene description document. The thus determined protected scene description document and the associated sequence of update patches may be transmitted to the rendering device (step **908**).

Hence, this embodiment aims to protect nodes in a scene description document that are addressed in a sequence of pre-recorded patches. The nodes may be associated a protected status to ensure that the pre-recorded patches can be executed as intended by the content author and that pre-recorded patches are not discarded.

**Fig. 9B** depicts a method which may be executed by rendering device that is configured to render interactive scenes based on a protected scene description document and an associated sequence of update patches. The process may start with receiving by a rendering device a protected scene description and sequence of update patches associated with the protected scene description (step **910**).

As described with reference to **Fig. 9A**, the protected scene description may comprise a data model defining an interactive scene comprising 3D objects, wherein the data model may include hierarchically organized nodes. The nodes may include object nodes, wherein each object node may be associated with a 3D object and with object metadata which includes information about interaction with the 3D object by a user or interaction with the 3D object based on physics simulation.

The protected scene description may further comprise object protection metadata identifying one or more protected object nodes. The object protection metadata may signal the rendering device that interaction with 3D objects associated with protected object nodes by a user or based on physics simulation is disabled or limited when applying the sequence of update patches to the protected scene description.

The rendering device may subsequently render interactive scenes wherein the rendering may include applying the sequence of update patches to the protected scene description. An interactive scene may be rendered each time the scene description is updated based on an update patch. During the application of the sequence of update patches the rendering device disables or limits interaction (by the user or based on physics simulation) with rendered 3D objects based on the object protection metadata in the protected scene description.

This embodiment illustrates that during the rendering of interactive scenes nodes in scene description may be protected against interactions that collide with the application of the update patches. Interactions by a user and/or interactions by physics simulations are restricted to the nodes that will not be used or modified by upcoming prerecorded patches. This way, situations are avoided which may disrupt the scene either as a result of pre-recorded patches being discarded or pre-recorded patches being misapplied to a scene different from what they were intended for.

The use of the protected scene description documents ensures that no accidental or malicious changes to the scene document due to user interaction occurs and that correct execution of the pre-recorded patches is guaranteed. Restoration may be performed after execution of all pre-recorded patches to remove all previously placed protection measures on the scene.

The schemes for protecting a scene may include two steps. First, nodes in the scene description document may be identified that need protection against user interaction and/or interaction based on physics simulation. Here, protection means that user interaction and/or interaction based on physical simulation with a 3D object will be temporary disabled or at least limited. To that end, the sequence of pre-recorded patches that need to be applied to the scene description document may be parsed and checked to identify nodes that are used and/or modified by the pre-recorded update patches.

Information about which nodes are identified and temporarily blocked or limited from interaction may be inserted as metadata in the scene description document. The nodes identified in the scene description document for which interaction is blocked or limited may be referred to as protected nodes. A scene description document that includes information about protected nodes may be referred to as a protected scene description document.

Parent nodes connected to identified children nodes may be included in the list of protected nodes as well, because modifications to the parent nodes also affect the children nodes. The duration for which the protected nodes are protected can be determined by identifying the latest pre-recorded patch in the sequence of pre-recorded patches that will use and/or modify the protected nodes. The specific properties of nodes referred to in the pre-recorded patches can be checked to find which properties of the protected nodes are modified by the pre-recorded patches. After identifying the protected nodes, restrictions are placed in those nodes so that at least certain modifications to those nodes (caused by user interaction or interaction by physical simulation) are prevented for at least the duration the pre-recorded patches will use or modify them. Information about the restrictions for the protected nodes may be inserted as metadata in the protected scene description document.

In an embodiment, a restriction to prevent undesired modifications to the protected nodes may include restricting user interaction with the protected nodes. This allows the user to interact with the scene as usual while only restricting interaction with the protected nodes. The interaction restrictions can be minimal or full restrictions. In the minimal restriction mode - after assessing the specific property of nodes referred in prerecorded patches - only interactivity actions which can potentially change the same specific property referred in the patches are not allowed. Changing the hierarchy of the protected nodes is not allowed at all times. In the full restriction mode any interaction with the protected nodes is not allowed.

In a further embodiment, a restriction to prevent undesired modifications to the protected nodes may include restricting the physics interactions with the protected nodes. In this case, the physics simulation in the scene may proceed while the protected nodes are protected from any modification due to physics. Different modes may be defined to achieve this.

In an embodiment, the restriction may relate to the passthrough mode wherein any physics interaction with protected nodes will not affect the protected node or anything that interacted with it. In that case, it is as if the protective node does not exist with respect to the physics simulation. In another embodiment, the restriction may relate to the solid mode, wherein the protected nodes act as an infinite mass and any physics interaction with the protected node will result in perfectly elastic collision (anything that collided will maintain its velocity after collision with the protected nodes). This means the protected nodes are immovable and any interaction with the protected nodes will not result in any modification to the protected nodes.

During operation, after protecting the nodes in the scene that are affected by pre-recoded patches, the scene as defined by the hierarchical model in the scene description document can be used by a single user or multiple users to experience the scene as intended while allowing user interactivity and interaction based on physics simulation. During operation, the scenes as defined by the sequence of pre-recorded patches, can be enforced to enable a smooth and consistent experience.

In a multi-user setting, pre-recorded update patches may collide with user-generated updated patches. In that case, users whose proposed update patches do not align with the protected objects in the protected scene description document may be notified. This may be realized in different ways:
1. During operation of an interactive multi-user application, application of pre-recoded patches to a shared scene description document may always be prioritized over the user update patches;
2. Users whose user update patches are rejected as a result of prioritizing the prerecorded patches over the user-generated updates patches may be notified and revert their local scene to an acceptable state

After all pre-recorded patches have been applied to the scene description document (and subsequently rendered by a rendering device of the user), the protection of the protected nodes may be removed and the nodes may be restored to their original state. This process may be referred to as scene restoration.

In case of a replay scene of an interactive multi-user live media that is delivered as a sequence of pre-recorded patches, the live media in the scene may be protected on the fly. During that process the live media may be replaced with on-demand media and updated with timing information. This way, two separate scenes description documents for rendering the live scene and the replay scene may be avoided. This may be achieved in the following way:
1. During the creation of a protected scene description document, all live media sources referred to in the scene description document may be replaced with on-demand media sources. If such on-demand media source does not exist, those media sources will be removed and disabled.
2. Further, when adding the on-demand media sources to the protected scene description document, playback timing information is provided for the media so that it can be synchronized with the pre-recoded patches. An example is to specify the offset for the start of the media with regards to the scene activation time.

During the restoration phase, the on-demand media may be replaced with the live media if it already exists and the timing information that was added for synchronization of the on-demand media is removed. If the live media source was simply disabled or removed, it can also be re-enabled or added as part of the restoration process.

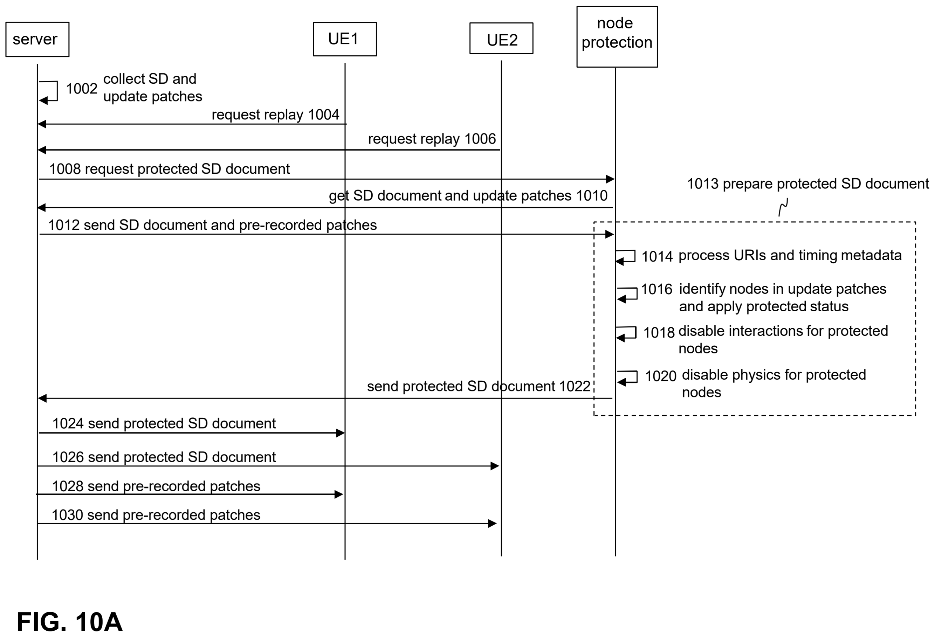

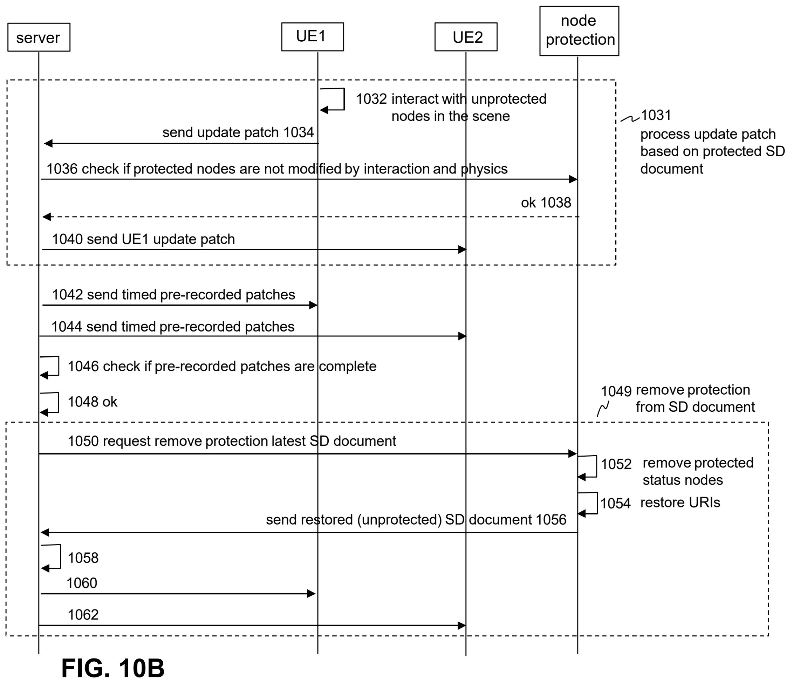

**Fig. 10A** and **10B** describe a process of rendering an interactive scene based on a protected scene description and an associated sequence of update patches according to an embodiment. As shown in the figures, the process may include: preparing a protected scene description document based on a scene description document and a sequence of update patches (block **1013**), rendering scenes based on the protected scene description and the sequence of patches (block **1031**) and restoring the original scene description document after having process the sequence of update patches (block **1049**).

The process depicted in the figure may relate to a multi-user application configured to provide a multi-user XR experience using an MPEG scene description document and a server for managing and synchronizing the updates of the scene description document. The server may be configured to use a node protection service which is configured to determine a protected scene description document associated with a sequence of update patches.

As shown in **Fig. 10A**, the process may start with collecting the scene description document of live event along with all patches generated by live users (step **1002**), in this case a first user associated with a first rendering device UE1 and a second user associated with a second rendering device EU2. Both the first and second user may request replay of the of the interactive multi-user live event (steps **1004** and **1006**) to a server, which may be part of a media system as described with reference to **Fig. 1-5** and **Fig. 11****.**

In response to the requests of the users, the server may request a node protection module to determine a protected screen description document (step **1008**). In response, the node protection module may request a scene description document of the live event and all associated update patches and the server may send the scene description document of the live event and all pre-recorded patches of the live event to the node protection module (steps **1010** and **1012**).

The node protection module may then prepare the protected scene description document based on the received information. The preparation of the protected scene description document my include replace live media URIs with on-demand media URIs and timing metadata (step **1014**), identify nodes in the scene description document that will be modified by the update patches and determine protected nodes by applying a protected status to the identified node (step **1016**). For these protected nodes interactions and/or interactions based on physics simulations are disable or limited (step **1018** and **1020**). Node protection metadata associated with the protected nodes may be inserted in the scene description document to form a protected scene description document, which may be sent to the server (step **1022**). The server may send the protected scene description document and the associated timed pre-recorded patches of the live event to the rendering devices of the first and second user (steps **1024-1030**).

Hence, in the embodiment of **Fig. 10A** an interactive replay experience is shared by two users (user1 and user2). The multi-user replay experience is orchestrated by a server that maintains a copy of the original scene and the entire sequence of pre-recorded update patches. On receiving a request from the users, the server first sends the SD document and the sequence of pre-recorded patches to the node protection module. The node protection module then prepares a protected copy of the scene description document.

The node protection module may parse and examine the sequence of prerecorded patches and determines a list of candidate nodes in the scene that are affected (e.g. modified or used) by the pre-recorded patches. The node protection module may also determine the presentation time of the last pre-recorded patch that refers to a candidate node. Further, the node protection module parses and examiners the scene description document and identifies the hierarchical relation of each of these candidate nodes with respect to the root node of the scene. This way, parent nodes of the identified nodes may also be identified as a candidate node. For each parent node, the node protection module determines the maximum presentation time for all connected candidate nodes. This list of nodes may be identified in the scene description document as protected nodes.

Protected nodes may be associated with object protection metadata including metadata fields for disabling and/or liming interaction and physics as described below. In an embodiment, for interaction each protected node (candidate and parent) may be associated with one or more of the following metadata fields:

| |
|---|
| ```
              scene:
               nodes:
                TNO_sanitization_interaction:
                 disable_interactions: True
                 protection_end_time: 100
``` |

This example shows a metadata field "disable_interacations" which may be used to disable the SD extensions MPEG_scene_interactivity and MPEG_node_ interactivity as defined in the MPEG SD standard ISO/IEC FDIS 23090-14 Information technology - Coded representation of immersive media - Part 14: Scene Description for MPEG Media. This way, the SD extensions can be disabled for protected nodes. A further metadata field "protection_end_time" may be used to indicate at which point in time the protection of the nodes are lifted. The moment for removing the protection may be based on the global common presentation timeline.

To handle modifications of objects nodes resulting from the physics simulation the following modes may be used:
1. Passthrough mode: In this mode, all other objects in the scene may freely pass through a 3D object associated with protected object nodes. In this mode protected object nodes are completely excluded from the physics simulation.
2. Solid mode: In this mode, protected nodes remain a part of the physics simulation and behave as immovable objects. All other objects in the scene will experience perfectly elastic collisions with an infinite mass when they collide with 3D objects associated with protected object nodes.

For physics simulations, a protected node (candidate and parent) may be associated with one or more of the following metadata fields:

| |
|---|
| ```
              scene:
               nodes:
                TNO_sanitization_physics:
                 disable_physics: True
                 protection_end_time: 100
                 physics_mode: "Solid"
``` |

In an embodiment, a metadata field "disable_physics" may be used to disable object interaction through simulations. A metadata field "physics_mode" may be used to determine the mode in which simulations, such as physics simulations, may be treated when a 3D object is associated with a protected node. A further metadata field may indicate that the limitations to the physics properties of 3D objects associated with protected nodes are applied until the global common presentation timeline reaches protection_end_time.

In the case of a shared replay experience of live media, the original scene description document may contain links to live media. In that case, all live media present in the MPEG_media extension of the scene description document need to be replaced with links to on-demand media. The links to live media in the MPEG_media array are replaced with the links to on-demand media. A scene author must further specify a startTimeOffset for on-demand media. Further, all added on-demand media are placed is the same autoplayGroup to ensure synchronized playback. Media controls may be set to false for new on-demand media. If the scene author does not provide this information live media is removed from the MPEG_media array.

As shown in **Fig. 10B**, the process may continue with the rendering devices of the first and second users rendering an interactive scene based on the protected scene description document and the associated sequence of pre-recorded updated patches (box **1031**)**.** During the rendering of the interactive scene, the users, e.g. the first users, may interact with 3D objects that are associated with object nodes that are not protected (step **1032**)**.** In that case, the rendering device may send a user-generated update patch to the server (step **1034**), which may forward the user-generated update patch to the node protection module (step **1036**) to check if the protected nodes in the protected scene description are not affected by the interaction and/or physics simulation that is associated with the user-defined update patch. The node protection module may confirm that the user-generated update patch is ok (step **1038**). The server may then send the user-generated update patch to the second rendering device (step **1040**)**.** Meanwhile, the server may send timed pre-recorded update patches associated with the live event to the first and second rendering device (step **1042** and **1044**), until the server determines that the processing of the pre-recorded patches is complete (steps **1046** and **1048**)**.**

Hence, as shown in Fig. **10B** when the rendering of the interactive scenes based on the protective scene description document and the associated update patches being, users are able to interact with and modify unprotected nodes in the scene. After such an interaction, a user-generated patch is created that needs to be distributed to other users in the scene. The first rendering devices creates a patch after making an interaction/ modification and send it to the server. The server sends this patch to the node protection module for verification. It verifies the patch against current and future pre-recorded patches to ensure rules for protecting the nodes are followed. If the patch is accepted, the server then distributes it to other users. If the patch is rejected, the node protection module may inform the server. The server then issues a patch back to the first rendering device in order to undo their interaction/ modification and restore their scene to an acceptable state consistent with other users. The server may discard the original user-generated patch and does not propagate it to other users. In this way, the active scene of all users remains consistent and protected against changes that can break the experience. The server continues to deliver pre-recorded patches to all users. The movement of candidate nodes is interpolated between the positions described in consecutive pre-recorded patches.

Once all pre-recorded patches are process, the server may request to remove the protection of the most recent protected scene description document (step **1050**)**.** In response, the node protection module may remove the protected status of all object nodes (step **1052**)**.** Further, it may replace on-demand media URIs with live media URIs (if available) (step **1054**)**.** The restored unprotected scene description document may be sent to the server, which subsequently prepares a restoration patch for the first and second rendering device (step **1058**)**.** The server sends the restoration patches to the first and second rendering device (steps **1060** and **1062**) which may apply the restoration patch to the protected scene description document to the lift the protective status of the object nodes.

After the entire sequence of pre-recorded patches has been distributed and applied the experience is ready for restoration. The server sends a restoration request to the node protection module along with the latest copy of the scene description document. The node protection module may remove all restrictions placed on protected nodes. In addition, the node protection module may replace the links to on-demand media in the MPEG_media extension of the scene description document with links to live media (if available). The restored scene description document is then sent to the server. The server prepares a restoration patch by comparing the restored scene description document to the latest active SD document. The restoration patch is distributed to both users and they are now able to make unrestricted interactions and modifications to the scene.

It is submitted that the example of **Fig. 10** is just a non-limiting example for processing patches and many different variants exits without departing from the general teaching of the embodiments. For example, instead of a protected scene description document, information indicating that nodes are protected may be sent separately from the scene description document to the users.

A further embodiment relates to applying minimal restrictions of user actions during the process of protecting the object nodes. In this configuration the behavior of interaction restrictions as described above may be modified. The following restrictions on node level actions may be defined:

### Actions permitted for protected nodes

| Action type | Restriction |
|---|---|
| ACTION_ACTIVATE | The activationStatus cannot be set to 1 for all protected nodes |
| ACTION_TRANSFORM | ACTION_TRANSFORM is blocked for protected nodes whose transform property or whose children's transform property is modified in any of the pre-recorded patches |
| ACTION_BLOCK | Protected nodes cannot be added to the ACTION_BLOCK node array |
| ACTION_ANIMATION | ACTION_ANIMATION is blocked for all protected nodes |
| ACTION_MEDIA | ACTION_MEDIA is blocked for protected nodes only if their media playback is referred to by pre-recorded patches |
| ACTION_MANIPULATE | ACTION_MANIPULATE is blocked for all protected nodes. |
| ACTION_SET_MATERIAL | ACTION_SET_MATERIAL is blocked for protected nodes whose material is referred to by pre-recorded patches. |
| ACTION_HAPTIC | ACTION_HAPTIC is blocked for protected nodes whose Haptic properties are referred in the pre-recorded patches. |

As in the table, actions related to manipulation of a virtual object and simulation (i.e. ACTION_MANIPULATE and ACTION_ANIMATION) are fully restricted because the property of the node that will be affected by these actions cannot be known beforehand. The manipulate actions relates to continuous real-time user tracking while the animation relates to a separate animation file. These actions can affect any node property so these actions are blocked.

The ACTION_ACTIVATE is not allowed to be set to 1 for all protected nodes because setting ACTION_ACTIVATE to 1 will lead to applications skipping the protected nodes. Protected nodes cannot be added to the ACTION_BLOCK node array by the user because the adding them to the ACTION_BLOCK will block the transform of the nodes from further modifications.

The rest of the properties are disabled for the nodes only when they are referred to in the pre-recorded patches.

Hence, instead of fully disable interactions, further metadata fields may be added to the object protection metadata wherein properties of a node may be selectively disabled. Each protected node (candidate and parent) receives the following metadata fields:

| |
|---|
| ```
              scene:
               nodes:
                TNO_sanitization_interaction:
                 disable_all_interactions: False
                 disable_activate_transform: True
                 disable_activate_media: False
``` |
| ```
                 disable _activate_material: False
                 disable_activate_haptic: False
                 protection_end_time: 100
``` |

As shown in this example, certain properties or actions associated with a node, e.g. transform, media, material, haptic, may be disabled depending on the way the update patches interact with the nodes. The disabled actions are restored when the common presentation timeline reaches protection_end_time.

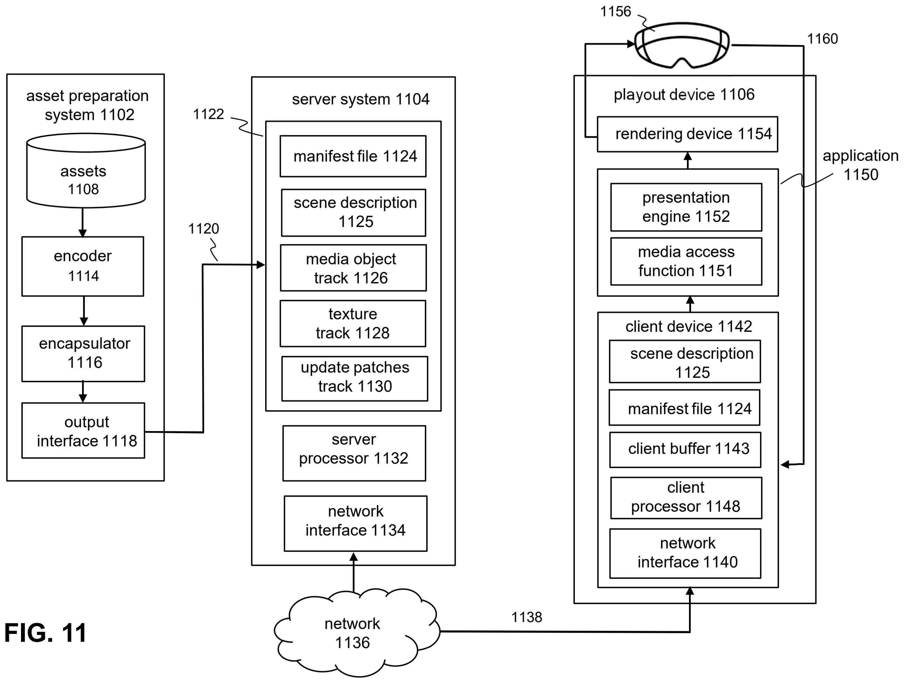

**Fig. 11** depicts a schematic of an exemplary rendering system which is adapted to render interactive scenes based on a protected scene description document and an associated sequence of update patches according to the embodiments in this disclosure.

The system may include an asset preparation system **1102**, a server system **1104,** and media playout device **1106** comprising a client device **1142**, which may communicate via a network **1136** (including the Internet) to the server system. In some embodiments the content preparation system may be part of the server system. In other embodiments, the content preparation system may be connected to the server system via e.g. the network **1136** or another network, or may be directly communicatively coupled. The server system **1104** may include a server processor **1132** and one or more network interfaces **1134** which are configured to send and receive data via network **1136.** In some embodiment, functionalities of the server system and the asset preparation system may be implemented in the form of a distributed system including a plurality of communicatively connected network devices, including but not limited to routers, bridges, proxy devices, switches, etc. In an embodiment, the server system may be part of a CDN.

The asset preparation system **1102** may include a source of stored assets **1108** for 3D rendering, including different type of media data, e.g. 2D and 3D video data, point clouds, 3D objects including 3D meshes and textures, etc. At least part of the assets may be stored in the form of a video-based asset pack, i.e. sequence of video frames wherein the assets, e.g. textures or other type of asset data, are encoded in video frames so that these files can be compressed and streamed based on an adaptive streaming protocol.

The asset preparation system may include an encoder system **1114** comprising one or more encoder instances for encoding the media data. The encoder system may produce one or more encoded media data streams (in short media streams) representing assets, e.g. textures for one or more 3D models in a scene, that are needed for rendering a scene. In some embodiments, an individual stream may be referred to as an elementary stream representing a single, digitally coded component (e.g. video or audio) of a media representation. The asset preparation system may further include a packetizer **1116** for converting elementary streams comprising encoded media data into a packetized stream, e.g. a packetized elementary stream (PES). The PES streams may be formatted, e.g. encapsulated, by an encapsulator **1117** for transport so that that encoded media data can be transmitted to the server system using a suitable media streaming standard such as MPEG-DASH, HLS or CMAF and stored as one or more media files at a storage medium of the server system **1104.** The encapsulator may be configured to generate media files, which are formatted according to a predetermined data format for example CMAF fragment or DASH segments.

Media data which are encoded in one or more elementary streams according to a certain bitrate or quality may form a media representation or in short a representation. The encoder system **1014** may be configured to encode media data of a media title in different ways using a video coding standard to produce different representations of a media title at various bitrates and various characteristics, such as pixel resolutions, frame rates, conformance to various coding standards, etc. These different representations may be used for adaptive bitrate streaming as known from streaming protocols such as DASH. In particular, the encoder system may encode the media data according to any suitable standardized coding scheme such as H.264/AVC, HEVC or VVC and, in case of point cloud, the Geometry-based PCC (G-PCC) and Video-based PCC (V-PCC) compression standards.

The encapsulator **1116** may be configured may be configured to format packets of elementary systems into network abstraction layer (NAL) units. NAL units, which are defined as part of the H.264/AVC and HEVC video coding standards, include Video Coding Layer (VCL) NAL units comprising video data payload and non-VCL NAL units, which may comprise metadata such as parameter sets (important header data that can apply to a large number of VCL NAL units) and supplemental enhancement information (timing information and other supplemental data that may enhance usability of the decoded video signal). Non-VCL NAL units may include sequence parameter sets (SPS), which apply to a series of consecutive coded video pictures called a coded video sequence and picture parameter sets (PPS), which apply to the decoding of one or more individual pictures within a coded video sequence. Non-VCL NAL units may further include Supplemental Enhancement Information (SEI) messages which may contain information for assisting the decoding process.

A set of NAL units may define a so-called access unit which together may form a coded picture (a video frame), This way, the decoding of an access unit generally results in one decoded picture (a decoded video frame). A coded video sequence consists of a series of access units that are sequential in the NAL unit stream and use only one sequence parameter set. Each coded video sequence can be decoded independently of any other coded video sequence, given the necessary parameter set information, which may be conveyed "in-band" or "out-of-band". At the beginning of a coded video sequence is an instantaneous decoding refresh (IDR) access unit. An IDR access unit comprises an intra picture (I-frame) which is a coded picture that can be decoded without decoding any previous pictures in the NAL unit stream. The presence of an IDR access unit indicates that no subsequent picture in the stream will require reference to pictures prior to the intra picture it contains in order to be decoded. The encapsulator may use coded video sequences to produce short non-overlapping short video files, such as DASH segments and CMAF fragments, that are used by adaptive streaming protocols to provide adaptive streaming functionality.

The encapsulator **1116** may be further configured to determine one or more manifest files **1124** and/or scene description files **1125.** An example of a manifest file is a media presentation descriptor (MPD) in case MPEG-DASH is used for streaming the media data. The manifest file and/or scene description files may identify media assets **1126-1128**, such as media objects, e.g. 3D objects, and textures and update patches **1130.** The manifest file and/or scene description file may comprise information formatted according to a certain syntax such as the extensible markup language (XML) or JSON. In some embodiments, media assets may be divided into so-called adaptation sets. An adaptation set may define media data associated with a common set of characteristics, including but not limited to e.g. codec, profile and level, resolution, number of views, file format for segments, etc. The manifest file and/or scene description file may include data identifying such adaptation sets and further information associated with characteristics, such as bitrates, of specific representations of adaptation sets. The packetized and encapsulated media files, e.g. CMAF fragments and/or DASH segments, prepared by the assets preparation system may be stored at the server system as tracks **1126-1130** and an associated manifest file **1124** and/or scene description **1125.** These assets may include video-based asset packs as described with reference to the embodiments in this disclosure.

The server processor **1132** may be configured to receive network requests from client devices, such as client device **1142.** The client device may comprise a client processor **1148** configured to request media data and/or metadata, e.g. a manifest filed, that is stored at the server system. Based on a manifest file **1124** and/or scene description stored at the client device, the client device may request (via the client processor) media assets form the server system and store the media data in a client buffer **1144.** The buffered (encoded) media assets may be provided to the to a rendering application **1150** comprising a media access function **1151** and a presentation engine **1152** as described with referend to **Fig. 2****.** The MAF may retrieve media assets (upon instruction from the PE) based on the scene description. Functions of the client device, the MAF and the PE may overlap so that the distinction between the different entities is not so strict. In any case, the client device may be configured such that the MAF is capable of receiving asset packs using a HTTP adaptive streaming protocol such as DASH or the like.

Assets processed by the rendering application may be provided to a rendering device **1152**, e.g. a GPU-based renderer comprising a frame buffer for a display **1156.** The display device may be implemented as any type of display devices, including display devices such as a head-mounted device for rendering XR-type of media data (e.g. tiled 360 video data). Sensor information **1160** associated with the display device, e.g. viewing direction and pose information, may be used to control the rendering process and to select the assets that are needed for rendering.

The server processor **1132** and client processor **1148** may be implemented to process requests based on the hypertext transfer protocol (HTTP), for example HTTP version 1.1, which allow transmission of encoded media data based on the chunked transfer encoding mode. This way, the server request processor may be configured to receive HTTP messages, such as HTTP GET or partial GET requests and sent media data in response to the requests back to the client device. The requests may specify a video file or a part of a specific part, e.g. a fragment or a chunk of a fragment, of one of the tracks **1126-1130**, e.g., using a resource locator, such as an URL. In some examples, the requests may also specify a byte range for identifying a chunk in a fragment. Instead of HTTP other client-server communication protocols may be used to handle request and response messages. For example, in an embodiment, a bi-directional communication channel between the client and the sever system may be realized based on a WebSocket protocol. In that case, a handshake request may be used to set up a WebSocket connection between the client and server. Request and response messages may be exchanged between the client and the server over the WebSocket connection. Other protocols that may be used to communicate between the server and the client include Long polling, WebRTC, SignalR, or the like.

The network interface **1140** of the client device may receive media and buffer media, e.g. encapsulated and packetized media assets such as CMAF fragments or chunks of a selected representation. The client processor **1148** may be configured to decapsulate the media files into PES streams and depacketize the PES streams into encoded media assets, e.g. a sequence of encoded video frames of an asset pack.

The devices and modules depicted in **Fig. 11** such as encoder, packetizer, encapsulator, server processor, client processor, etc. may be implemented as any of a variety of suitable processing circuitry, as applicable, such as one or more microprocessors, digital signal processors (DSPs), application specific integrated circuits (ASICs), field programmable gate arrays (FPGAs), discrete logic circuitry, software, hardware, firmware or any combinations thereof. Alternatively and/or additionally these devices and modules may comprise an integrated circuit, a microprocessor, and/or a wireless communication device.

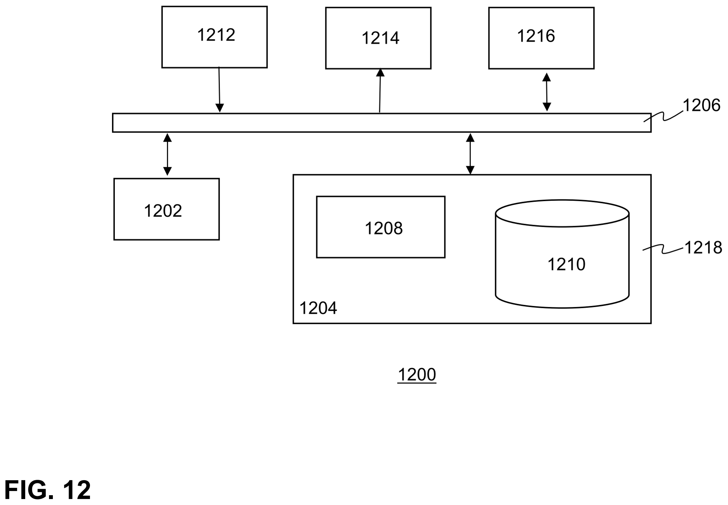

The devices and systems described with reference to embodiments in this disclosure, such as the client device, the server system and the content preparation system are typically implemented as one or more communicatively connected data processing systems. **Fig. 12** is a block diagram illustrating an exemplary data processing system that may be used in as described in this disclosure. Data processing system **1200** may include at least one processor **1202** coupled to memory elements **1204** through a system bus **1206.** As such, the data processing system may store program code within memory elements **1204.** Further, processor **1202** may execute the program code accessed from memory elements **1204** via system bus **1206.** In one aspect, data processing system may be implemented as a computer that is suitable for storing and/or executing program code. It should be appreciated, however, that data processing system may be implemented in the form of any system including a processor and memory that is capable of performing the functions described within this specification.

Memory elements **1204** may include one or more physical memory devices such as, for example, local memory **1208** and one or more bulk storage devices **1210.** Local memory may refer to random access memory or other non-persistent memory device(s) generally used during actual execution of the program code. A bulk storage device may be implemented as a hard drive or other persistent data storage device. The data processing system **1200** may also include one or more cache memories (not shown) that provide temporary storage of at least some program code in order to reduce the number of times program code must be retrieved from bulk storage device **1210** during execution.

Input/output (I/O) devices depicted as input device **1212** and output device **1214** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1216** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system.

As pictured in **Fig. 12**, memory elements **1204** may store an application **1218.** It should be appreciated that data processing system may further execute an operating system (not shown) that can facilitate execution of the application. Application, being implemented in the form of executable program code, can be executed by data processing system, e.g., by processor **1202.** Responsive to executing application, data processing system may be configured to perform one or more operations to be described herein in further detail.

In one aspect, for example, data processing system may represent a client data processing system. In that case, application **1218** may represent a client application that, when executed, configures data processing system to perform the various functions described herein with reference to a "client". Examples of a client can include, but are not limited to, a personal computer, a portable computer, a mobile phone, or the like. In other aspects, data processing system may represent a server data processing system. In that case, application **1218** may represent a server application that, when executed, configures data processing system to perform the various functions described herein with reference to a "server".

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method of processing a scene description associated with an interactive scene, the method comprising:
receiving the scene description comprising a data model defining the interactive scene, the interactive scene comprising one or more virtual objects, the data model including hierarchically organized nodes, the nodes including object nodes, each object node being associated with a virtual object of the one or more virtual objects;
receiving object metadata associated with the object nodes, the object metadata including transform information comprising a position, orientation and/or scaling for the one or more the virtual objects in the interactive scene and interaction information defining one or more types of interaction that are available for the one or more virtual objects;
receiving one or more update patches, preferably a sequence of update patches, for updating the scene description, wherein applying an update patch to the scene description results in an updated scene description;
determining object protection metadata defining one or more object nodes of the object nodes in the data model as protected objects nodes, the object protection metadata signalling that interaction with virtual object objects associated with the protected object nodes is disabled or limited during the application of the one or more update patches to the scene description; and,
sending the object protection metadata to a rendering device.

2. Method according to claim 1 wherein determining object protection metadata includes:
determining one or more object nodes associated with one or more virtual objects for which the hierarchy in the data model is modified when at least one of the one or more update patches is applied;

3. Method according to claims 1 or 2 wherein determining object protection metadata includes:
determining object nodes associated with virtual objects for which the transform information and/or the interaction information is modified when at least one of the one or more update patches is applied.

4. Method according to any of claims 1-3 wherein the object protection metadata signals a presentation engine to disable or limit the scene interactivity and/or node interactivity as defined in the MPEG SD standard; and, optionally, the object protection metadata signals when the disablement or limitation of the scene interactivity and/or node interactivity is lifted.

5. Method according to any of claims 1-4 wherein the interaction information includes one or more triggers associated the one or more virtual objects, each trigger of the one or more triggers defining at least one of: a collision trigger, a proximity trigger, a visibility trigger, a user input trigger, a timer trigger that is activated based on a timer;
wherein the object protection metadata signals a presentation engine to disable or limit at least part of the one or more triggers associated the one or more virtual objects; and, optionally, the object protection metadata signals when the disablement or limitation of the at least part of the one or more triggers is lifted.

6. Method according to any of claims 1-5 wherein the interaction information includes one or more actions associated with the one or more virtual objects, the one or more actions including at least one of: a manipulation, e.g. a translation, rotation and/or scaling, of a virtual object, a haptic feedback, a sound effect, a playout of an animation, a playout of media data, or a physic simulation;
wherein the object protection metadata signals a presentation engine to disable or limit at least part of the one or more triggers associated the one or more virtual objects and, optionally, the object protection metadata signals when the disablement or limitation of the at least part of the one or more actions is lifted.

7. Method according to any of claims 1-6 wherein the nodes are organized in a tree-like structure comprising a root, the tree-like structure of nodes forming a scene graph and/or wherein scene description further includes one or more source identifiers, preferably one or more URIs or URLs, for identifying sources for obtaining media assets associated with the virtual objects.

8. Method according to any of claims 1-7 wherein the object metadata is included in the scene description; and/or, wherein the scene description is a scene description document as defined in the MPEG SD standard; and/or, wherein the update patches are update patches as defined in RFC 6902 from the IETF standardization organisation; and/or wherein the one or more patches are pre-recorded patches.

9. Method of rendering an interactive scene based on a scene description, the method comprising:
receiving the scene description comprising a data model defining the interactive scene, the interactive scene comprising one or more virtual objects, the data model including hierarchically organized nodes, the nodes including object nodes, each object node being associated with a virtual object of the one or more virtual objects;
receiving object metadata associated with the object nodes, the object metadata including transform information comprising a position, orientation and/or scaling for the one or more the virtual objects in the interactive scene and interaction information defining one or more types of interaction that are available for the one or more virtual objects;
receiving one or more update patches, preferably a sequence of update patches, for updating the scene description, wherein applying an update patch to the scene description results in an updated scene description;
receiving object protection metadata associated with the scene description and the one or more update patches, the object protection metadata defining one or more object nodes of the object nodes in the data model as protected objects nodes, the object protection metadata signalling that interaction with virtual objects associated with the protected object nodes is disabled or limited during the application of the one or more update patches to the scene description; and,
rendering by a rendering device an interactive scene based on the scene description, the one or more patches and the object protection metadata, the rendering including applying one of the one or more update patches to the scene description to determine an updated scene description and rendering an interactive scene based on the updated scene description, wherein during the application of an update patch interaction with virtual objects in the interactive scene is disabled or limited based on the object protection metadata.

10. Method according to claim 9 wherein a presentation engine (PE) in the rendering device is configured to control the rendering of the interactive scene based on the scene description, the presentation engine being further configured to instruct a media access function (MAF) to execute retrieval of media assets associated with the virtual objects.

11. An apparatus, preferably node protection module, for processing a scene description, the apparatus comprising:
a computer readable storage medium having at least part of a program embodied therewith; and, and a processor, preferably a microprocessor, coupled to the computer readable storage medium, wherein responsive to executing the computer readable program code, the processor is configured to perform executable operations comprising:
receiving the scene description, the scene description comprising a data model defining the interactive scene, the interactive scene comprising one or more virtual objects, the data model including hierarchically organized nodes, the nodes including object nodes, each object node being associated with a virtual object of the one or more virtual objects;
receiving object metadata associated with the object nodes, the object metadata including transform information comprising a position, orientation and/or scaling for the one or more the virtual objects in the interactive scene and interaction information defining one or more types of interaction that are available for the one or more virtual objects;
receiving one or more update patches, preferably a sequence of update patches, for updating the scene description, wherein applying an update patch to the scene description results in an updated interactive scene;
determining object protection metadata defining one or more object nodes of the object nodes in the data model as protected objects nodes, the object protection metadata signalling that interaction with virtual object objects associated with the protected object nodes is disabled or limited during the application of the one or more update patches to the scene description; and,
providing the object protection metadata to a rendering device.

12. An apparatus according to claim 11 wherein the processor is further configured to perform any of the method steps according to claims 2-10.

13. An apparatus, preferably a client device, for processing a scene description for a rendering device, the apparatus comprising:
a computer readable storage medium having at least part of a program embodied therewith; and, and a processor, preferably a microprocessor, coupled to the computer readable storage medium, wherein responsive to executing the computer readable program code, the processor is configured to perform executable operations comprising:
receiving the scene description comprising a data model defining the interactive scene, the interactive scene comprising one or more virtual objects, the data model including hierarchically organized nodes, the nodes including object nodes, each object node being associated with a virtual object of the one or more virtual objects;
receiving object metadata associated with the object nodes, the object metadata including transform information comprising a position, orientation and/or scaling for the one or more the virtual objects in the interactive scene and interaction information defining one or more types of interaction that are available for the one or more virtual objects;
receiving one or more update patches, preferably a sequence of update patches, for updating the scene description, wherein applying an update patch to the scene description results in an updated scene description;
receiving object protection metadata associated with the scene description and the one or more update patches, the object protection metadata defining one or more object nodes of the object nodes in the data model as protected objects nodes, the object protection metadata signalling that interaction with virtual objects associated with the protected object nodes is disabled or limited during the application of the one or more update patches to the scene description; and,
rendering by rendering device an interactive scene based on the scene description, the one or more patches and the object protection metadata, the rendering including applying one of the one or more update patches to the scene description to determine an updated scene description and rendering an interactive scene based on the updated scene description, wherein during the application of an update patch interaction with virtual objects in the intervative scene is disabled or limited based on the object protection metadata.

14. An apparatus according to claim 13 wherein a presentation engine in the rendering device is configured to control the rendering of the interactive scene based on the protected scene description, the presentation engine being further configured to instruct a media access function (MAF) to execute retrieval of media assets associated with the virtual objects.

15. A computer program product comprising instructions which, when the program is executed by a computer, cause the computer to carry the method steps according to any of claims **1-10.**
